# EUROPÄISCHE PATENTANMELDUNG

(11) **EP 1 662 243 A1**
(43) Veröffentlichungstag der Anmeldung: **31.05.2006**
(21) Anmeldenummer: 04027972.1
(22) Anmeldetag: 25.11.2004
(51) Int. Cl.: G01M 9/02

(54) **Strömungskanal**

(71) Anmelder: Adolf Thies GmbH & Co KG, 37083 Göttingen (DE)
(72) Erfinder: Egert, Manfred, D-37345 Weissenborn-Lüderode (DE)
(74) Vertreter: Rehberg Hüppe + Partner

(57) **Zusammenfassung**

Eine Vorrichtung (1) weist ein Gehäuse (2), das einen geschlossenen Strömungskanal (15) begrenzt, und ein Flügelrad (5), das in dem Gehäuse (2) zur Erzeugung einer definierten Strömung (15) eines Fluids (18) durch den Strömungskanal (15) zur Rotation um eine Achse (4) antreibbar ist, auf, wobei der Strömungskanal (15) um die Achse (4) des Flügelrades (5) herum verläuft und das Flügelrad (5) über seinen gesamten Umfang an den Strömungskanal (15) angrenzt.

## Beschreibung

Die Erfindung betrifft eine Vorrichtung zur Ausbildung eines geschlossenen Strömungskanals, insbesondere eines Windkanals, mit den Merkmalen des Oberbegriffs des Patentanspruchs 1.

Der Strömungskanal kann neben einem Windkanal beispielsweise auch ein Wasser- oder Ölkanal sein, in dem das durch den Strömungskanal strömende Fluid Wasser bzw. Öl ist. Von dem Fluid ist nur zu fordern, dass es strömungsfähig ist. Das schließt alle Gase und Flüssigkeiten ein.

Mit Strömungskanal wird hier der freie Querschnitt innerhalb des Gehäuses der Vorrichtung bezeichnet, durch den die Strömung des Fluids strömt, durch den sich jedoch nicht Teile eines Antriebs für die Strömung, wie beispielsweise Flügel des Flügelrads hindurch bewegen.

Der Begriff "Strömungskanal" wird hier auch nicht für die Begrenzung dieses freien Querschnitts oder gar für weitere Teile der Vorrichtung verwendet, sondern ausschließlich für den durchströmten freien Querschnitt selbst.

Bei einem geschlossenen Strömungskanal wird das Fluid in einer ringförmigen Strömung geführt, so dass zumindest Teile des Fluids dieselben Bereiche des Strömungskanals mehrfach durchströmen. Dem steht nicht entgegen, dass auch Teile des Fluids beim Betrieb der Vorrichtung ausgetauscht werden.

### STAND DER TECHNIK

Bei einer bekannten Vorrichtung zur Ausbildung eines geschlossenen Windkanals ist das Flügelrad Teil eines Radiallüfters, der dazu dient, Luft zu beschleunigen. Zusätzlich erfolgt eine Verdichtung der Luft in einem sich an den Radiallüfter anschließenden Bereich des Windkanals, um eine noch höhere Windgeschwindigkeit zu erreichen. Die Verdichtung erfolgt zu Beginn eines geradlinigen Abschnitts des Strömungskanals, in dem die Strömung geformt wird, bis sie einen würfelförmigen Messraum zumindest in dessen Mittelbereich homogen durchströmt. Hinter dem würfelförmigen Messraum setzt sich der Strömungskanal geradlinig fort, um Störeinflüsse zu vermeiden, die von dort auf den würfelförmigen Messraum rückwirken könnten. An den geradlinigen Bereich des Strömungskanals schließt sich ein Bereich des Strömungskanals an, der zu dem Radiallüfter zurückführt. Die homogene Strömung in dem mittleren Bereich des würfelförmigen Messraums wird so insgesamt mit einem sehr hohen technischen Aufwand erkauft. Die nutzbare Länge des Strömungskanals innerhalb des Messraums beträgt bezogen auf die Gesamtlänge des Strömungskanals nur einige wenige Prozent. Der Energiebedarf der Vorrichtung mit dem geschlossenen Windkanal entspricht in etwa den darin auftretenden Luftreibungsverlusten. Diese treten an allen überströmten Oberflächen auf. Allein die den Strömungskanal begrenzende Innenoberfläche des Gehäuses ist aufgrund der Länge des Strömungskanals sehr groß. Entsprechend sind die Luftreibungsverluste sehr groß. Auch die Verdichtung der Luft zur Beschleunigung der Luftmasse ist mit einem enormen Energieverbrauch verbunden. Die gesamte eingesetzte Energie wird letztlich restlos in Reibung und damit in Wärme oder in Schall umgesetzt. D.h., sie ist verloren. Gleichzeitig kann, um brauchbare Messergebnisse zu erzielen, die Messung nur an jeweils einem einzigen Prüfobjekt erfolgen, da sich mehrere Prüfobjekte durch ihre Beeinflussung der Strömung gegenseitig stören.

### AUFGABE DER ERFINDUNG

Der Erfindung liegt die Aufgabe zugrunde, eine Vorrichtung zur Ausbildung eines geschlossenen Strömungskanals mit den Merkmalen des Oberbegriffs des Patentanspruchs 1 aufzuzeigen, die mit einem geringeren apparativen Aufwand bereitstellbar und mit einem geringeren Energieaufwand betreibbar ist.

### LÖSUNG

Die Aufgabe der Erfindung wird erfindungsgemäß mit den Merkmalen des unabhängigen Patentanspruchs 1 gelöst.

Vorteilhafte Ausbildungen der neuen Vorrichtung sind in den Unteransprüchen 2 bis 10 beschrieben.

### BESCHREIBUNG DER ERFINDUNG

Bei der neuen Vorrichtung verläuft der Strömungskanal um die Achse des Flügelrads herum, wobei das Flügelrad über seinen gesamten Umfang an den Strömungskanal angrenzt. Dies bedeutet, dass der Strömungskanal vergleichsweise kurz ist und die neue Vorrichtung insgesamt einen sehr kompakten Aufbau aufweist. Typischerweise sind die äußeren Abmessungen des von dem Strömungskanal um die Achse des Flügelrads beschriebenen Rings doppelt so groß wie der Durchmesser des Flügelrads. In aller Regel sind sie nicht mehr als dreimal so groß. Durch die geringe Länge des Strömungskanals der neuen Vorrichtung sind Luftreibungsverluste an überströmten Oberflächen allein aufgrund der vergleichsweise kleinen Innenoberfläche des Gehäuses nur gering. Eine weitere Energieeinsparung wird dadurch erreicht, dass auf Verdichter verzichtet wird. Das um seine Achse rotierende Flügelrad nimmt in seinem Bereich befindliches Fluid mit und reißt so auch das Fluid in dem Strömungskanal mit, das frei mit dem Fluid im Bereich des Flügelrads kommuniziert.

Der Verlauf der mit dem Flügelrad in dem Strömungskanal hervorgerufenen Strömung hängt stark von dem Verlauf des Gehäuses um die Achse des Flügelrads ab. Wenn der Verlauf des Gehäuses um diese Achse rotationssymmetrisch ist, bilden sich überall um die Achse des Flügelrads herum in dem Strömungskanal identische Strömungsverhältnisse aus. Wenn das Gehäuse zumindest drehsymmetrisch zu der Achse des Flügelrads ausgebildet ist, gibt es zumindest mehrere Bereiche des Strömungskanals, deren Anzahl dem Grad der Drehsymmetrie entspricht und in denen identische Strömungsverhältnisse vorliegen. So ist es problemlos möglich, in einem vergleichsweise großen Bereich des Strömungskanals eine definierte Strömung hervorzurufen. Diese definierte Strömung weist in der Regel auch Teilbereiche auf, in denen sie homogen ist, wie im Zusammenhang mit konkreten Ausführungsbeispielen der neuen Vorrichtung im Folgenden erläutert werden wird.

Wenn der Strömungskanal in Richtung der Achse des Flügelrads dieselbe Erstreckung aufweist wie das Flügelrad, wird das Fluid in dem Strömungskanal über dessen gesamte Höhe in Richtung der Achse des Flügelrads von dem Flügelrad mitgerissen. Hierdurch bildet sich eine im Wesentlichen ringförmige Strömung des Fluids durch den Strömungskanal in Ringen um die Achse des Flügelrads aus.

Wenn sich der Strömungskanal in Richtung der Achse des Flügelrads auf mindestens einer Seite über das Flügelrad hinaus erstreckt, wird in dem Strömungskanal eine um die Achse des Flügelrads umlaufende spiralförmige, tornadoähnliche Strömung erzeugt.

Wie bereits angedeutet wurde, ist ein rotationssymmetrischer Aufbau des Gehäuses um die Achse des Flügelrads günstig. So kann das Gehäuse beispielsweise einen zylinderabschnittförmigen Innenraum aufweisen, dessen Zylinderachse mit der Achse des Flügelrads zusammenfällt und in dem der Strömungskanal und das Flügelrad angeordnet sind. Zur Reduzierung des Strömungswiderstands für eine spiralförmige Strömung des Fluids durch den Strömungskanal kann eine um die Zylinderachse herum verlaufende Zylinderwandung des Gehäuses eine Krümmung mit zu der Zylinderachse hin gerichtetem Krümmungsradius aufweisen.

Um Reibungswärme, durch die sich die Temperatur des Fluids in dem Strömungskanal beim Betrieb der neuen Vorrichtung unerwünscht erhöhen kann, abzuführen oder auch um das Fluid aus anderen Gründen zu temperieren, kann ein Wärmetauscher in Bezug auf die Strömung des Fluids im Bypass zu dem Strömungskanal angeordnet sein. Die Durchströmung des Wärmetauschers kann dabei durch Druckunterschiede zwischen den Punkten bewirkt werden, in denen der Wärmetauscher an den Strömungskanal angeschlossen ist.

Die mit dem Betrieb der neuen Vorrichtung verbundene Schallemission kann aufgrund des kompakten Aufbaus der Vorrichtung leicht eingedämmt werden, indem das gesamte Gehäuse der Vorrichtung mit einer Schalldämmung versehen wird. Dies ist bei herkömmlichen Vorrichtungen zur Ausbildung eines geschlossenen Strömungskanals aufgrund dessen Länge kaum möglich oder mit extremem Aufwand verbunden.

In dem Strömungskanal der neuen Vorrichtung können Strömungsleitbleche vorgesehen sein, um die Durchströmung bei ihrer Durchströmung des Strömungskanals zu führen. Hiermit ist eine gezielte Einflussnahme auf den Verlauf der Strömung durch den Strömungskanal möglich, durch die die Strömung beispielsweise auch lokal beschleunigt werden kann; insbesondere können auch unerwünschte Strömungskomponenten unterdrückt werden.

Bei der neuen Vorrichtung ist es in besonders vorteilhafter Weise möglich, in dem Strömungskanal eine Mehrzahl von Messplätzen in bezüglich der Achse des Flügelrads zu einander drehsymmetrischen Positionen vorzusehen. Bei gleichartigen Prüfobjekten auf den Messplätzen werden diese selbst dann in gleicher Weise von der Strömung beaufschlagt, wenn die Prüfobjekte wechselseitig die sie beaufschlagende Strömung beeinflussen, also beispielsweise eine Verschattung des Prüfobjekts durch ein davor liegendes Prüfobjekt erfolgt. Bei einer spiralförmigen Durchströmung des Strömungskanals treten aber auch derartige Verschattungen nicht oder nicht in relevantem Maße auf, weil die spiralförmige Strömung in den Abschnitten des Strömungskanals zwischen den Prüfobjekten immer wieder durch das Flügelrad erfasst und damit von Effekten des jeweils davor liegenden Prüfobjekts weitgehend befreit wird.

Eine besonders interessante Anwendung der neuen Vorrichtung besteht darin, eine Mehrzahl von Prüfobjekten mit einem Master, d.h. einem als Norm verwendeten weiteren Prüfobjekt, zu vergleichen, um beispielsweise eine Kalibrierung der anderen Prüfobjekte vorzunehmen. Wenn es sich bei den Prüfobjekten beispielsweise um Anemometer handelt, die in drehsymmetrischen Positionen um die Achse des Flügelrads angeordnet sind, sollten diese alle dieselben Strömungsgeschwindigkeiten messen. Die von den einzelnen Anemometern registrierten Strömungsgeschwindigkeiten können so auf einen mit ihnen in dem Strömungskanal angeordneten Master, von dem ausgegangen wird, dass er die wahre Strömungsgeschwindigkeit anzeigt, kalibriert werden.

Um negative Schwerkrafteinflüsse auf die neue Vorrichtung, die die Vergleichbarkeit der einzelnen Messplätze beeinträchtigen, möglichst weitgehend auszuschließen, ist die Achse des Flügelrads, die zugleich diejenige des Gehäuses ist, vertikal auszurichten.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig.1**: zeigt einen Vertikalschnitt durch eine erste Ausführungsform der neuen Vorrichtung.
- **Fig. 2**: zeigt einen Horizontalschnitt durch die Vorrichtung gemäß Fig. 1.
- **Fig. 3**: zeigt einen Vertikalschnitt durch die wesentlichen Teile einer zweiten Ausführungsform der neuen Vorrichtung.
- **Fig. 4**: zeigt einen Horizontalschnitt durch die Vorrichtung gemäß Fig. 3.
- **Fig. 5**: zeigt einen Vertikalschnitt durch die wesentlichen Teile einer dritten Ausführungsform der neuen Vorrichtung mit darin angeordneten Prüfobjekten,
- **Fig. 6**: zeigt einen Vertikalschnitt durch die Vorrichtung gemäß Fig. 5; und
- **Fig. 7**: zeigt einen Horizontalschnitt durch eine vierte Ausführungsform der neuen Vorrichtung.

### FIGURENBESCHREIBUNG

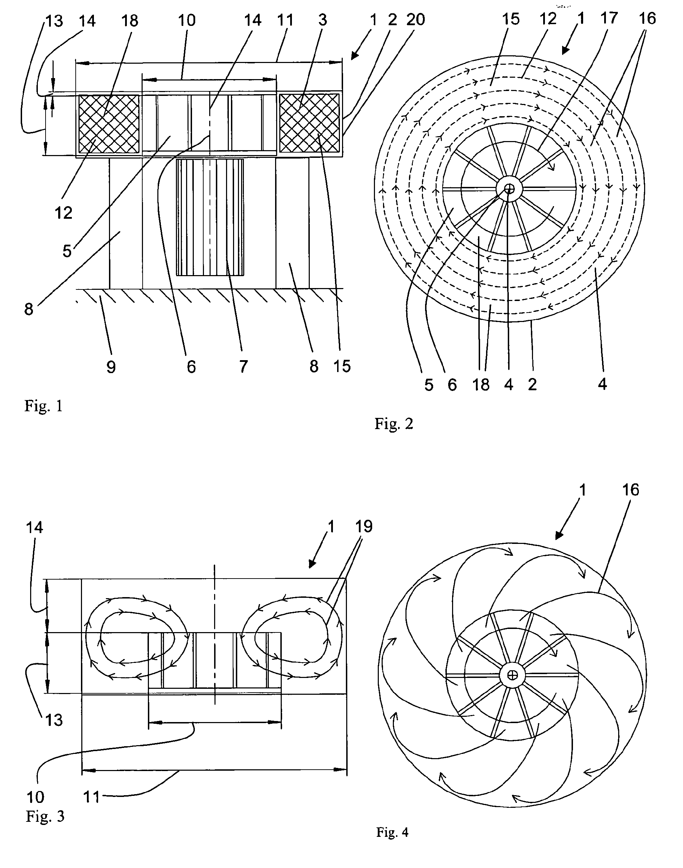

Die in den Fig. 1 und 2 dargestellte Vorrichtung weist ein Gehäuse 2 auf, das einen zylinderabschnittförmigen Innenraum 3 mit einer Zylinderachse 4 begrenzt. Die Zylinderachse 4 verläuft vertikal. In dem Innenraum 4 ist ein Flügelrad 5 um eine Achse 6, die mit der Zylinderachse 4 zusammenfällt, drehbar gelagert. Das Flügelrad 5 ist mit einer hier nicht zeichnerisch hervorgehobenen Abtriebswelle eines Antriebsmotor 7 verbunden, der es zur Rotation in um die Achse 6 in dem Innenraum 3 antreibt. Der Antriebsmotor 7 ist an der Unterseite des Gehäuses 2 angesetzt, das über hier nicht dargestellte Schwingungsdämpfer auf einem Sockel 8 ruht, der auf dem Boden 9 aufsteht, wobei die Abtriebswelle des Antriebsmotors bis zu dem Flügelrad 5 in das Gehäuse 2 hineinragt. Das Flügelrad 5 füllt den Innenraum 3 nicht vollständig aus. Sein Durchmesser 10 ist nur ungefähr halb so groß wie ein Innendurchmesser 11 des Gehäuses 2. So verbleibt in dem Innenraum 3 an das Flügelrad 5 angrenzend und sich um dessen Achse 6 herum erstreckend ein Rotationshohlraum 12 mit einer Querschnittsbreite, die der halben Differenz zwischen dem Durchmesser 10 und dem Innendurchmesser 11 entspricht. Die Querschnittshöhe des Rotationshohlraums 12 entspricht einer Höhe 13 des Flügelrads und einem hier vernachlässigbar kleinen Überstand 14 des Rotationshohlraums 12 über das Flügelrad 5 in Richtung dessen Achse 6. Bei der Vorrichtung 1 dient der Rotationshohlraum 12 als Strömungskanal 15, durch den mit dem Flügelrad 5 eine Strömung 16 hervorgerufen wird. Hierzu wird das Flügelrad 5 mit dem Antriebsmotor 7 um die Achse 6 in Rotation versetzt, was in Fig. 2 durch einen Drehpfeil 17 angedeutet ist. Von dem rotierenden Flügelrad wird ein Fluid 18, bei dem es sich hier um Luft handeln möge und das den Innenraum 3 neben dem Flügelrad 5 ausfüllt, beschleunigt. Im Bereich des Flügelrads 5 wird das Fluid 18 unmittelbar mit diesem in Rotation versetzt. Die Anteile des Fluids 18 in dem Strömungskanal 15 werden hiervon mitgerissen und ebenfalls in Umlauf um die Achse 4 bzw. die Zylinderachse 6 gebracht. Soweit sich keine Gegenstände in dem Strömungskanal 15 befinden, wird die Strömung 16 ausschließlich durch Reibung an dem Gehäuse 2 gebremst, so dass die Strömung nahezu zirkular um die Achse 4 des Flügelrads 5 bzw. die Zylinderachse 6 verläuft, wie dies in Fig. 2 zeichnerisch angedeutet ist. Hierdurch bildet sich im Mittelbereich des Querschnitts des Strömungskanals 15 eine bis auf Effekte der Krümmung des Strömungskanals 15 weitgehend homogene Strömung aus, und zwar über die gesamte Länge des Strömungskanals 15 um die Achse 4 des Flügelrads 5 bzw. die Zylinderachse 6. Wenn diese Länge des Strömungskanals 15 genutzt werden soll, indem mehrere Prüfobjekte hintereinander in dem Strömungskanal 15 angeordnet werden, kommt es zwar zu einer Verschattung der jeweils hinten liegenden Prüfobjekt in Bezug auf die Strömung 16. Wenn es sich jedoch um gleichartige Prüfobjekte in zueinander drehsymmetrischen Positionen um die Achse 4 bzw. die Zylinderachse 6 handelt, wirken sich auch die Verschattungen auf alle Prüfobjekte gleich aus, so dass sämtliche Prüfobjekte mit einer gleichartigen Strömung beaufschlagt werden. Dies ist zum Vergleich der Prüfobjekte in vielen Fällen wichtiger, als dass die Strömung beispielsweise exakt homogen ist.

Das Gehäuse 2 der Vorrichtung 1 ist sehr kompakt, insbesondere wenn es mit dem Gehäuse von Vorrichtungen zur Ausbildung herkömmlicher geschlossener Strömungskanäle, insbesondere geschlossener Windkanäle verglichen wird. Dies reduziert die Herstellungskosten der neuen Vorrichtung und den Platzbedarf der neuen Vorrichtung. Weiterhin sind die Reibungsverluste der Strömung 16 innerhalb der neuen Vorrichtung aufgrund der geringen Länge des Strömungskanals gering. Dies führt zu einem geringen Energiebedarf, zumal die neue Vorrichtung 1 auch ohne einen Verdichter für die Strömung 16 auskommt. Die Energieeinsparung geht auch mit einer insgesamt geringeren Entwicklung von Betriebsgeräuschen einher. Zusätzlich ist aufgrund des kompakten Gehäuses 2 eine geschlossene Geräuschdämmung besonders einfach realisierbar. Im Dauerbetrieb macht sich der geringere Verbrauch von Energie, die im Wesentlichen in Wärme umgesetzt wird, auch in einem geringeren Kühlbedarf bemerkbar. Dies führt zu einer zusätzlichen Energieeinsparung. Weiterhin kann der Strömungskanal theoretisch über seine gesamte Länge um die Achse 4 des Flügelrads bzw. die Zylinderachse 6 herum genutzt werden. Dabei können ohne weiteres auch mehrere Prüfobjekte hintereinander in dem Strömungskanal angeordnet werden. Hieraus resultierende Störungen der Homogenität der Strömung 16, die allein aufgrund des gekrümmten Verlaufs des Strömungskanals 15 nicht perfekt sein kann, sind in vielen Fällen problemlos hinzunehmen, weil der erzielte Vorteil einer gleichen Anströmung einer Mehrzahl von Prüfobjekten viel schwerer wiegt.

Für eine Anströmung einer Vielzahl von Prüfobjekten sind die im Folgenden beschriebenen Ausführungsformen der Vorrichtung 1 besonders gut geeignet. Die Figuren 3 und 4 zeigen eine Ausführungsform der Vorrichtung 1, die sich vom reinen Aufbau her von der Ausführungsform gemäß den Figuren 1 und 2 nur dadurch unterscheidet, dass der Überstand 14 über das Flügelrad 5 in Richtung dessen Achse 4 betrachtet ein relevantes Ausmaß annimmt und hier von derselben Größenordnung wie die Höhe 13 des Flügelrads 5 ist. Auf die Strömung 16 des Fluids 18 in dem Strömungskanal 15 hat dies die folgenden Auswirkungen. Durch die Zentrifugalkraft auf das in dem Innenraum 3 eingeschlossene rotierende Fluid 18 kommt es nahe dem Außendurchmesser des Innenraums 3 zur Entwicklung eines Überdrucks und in der Nähe der Achse 4 des Flügelrads 5 zu einem Unterdruck. Im Bereich des Überstands 14 kann sich das Fluid 18 zu der Achse 4 hin bewegen, um diese Druckdifferenz auszugleichen. Diese Bewegung des Fluids 18 führt zu einer Druckausgleichsströmung 19, die in Fig. 3 angedeutet ist. Durch diese Druckausgleichsströmung 19 wird die Durchströmung 16 des Strömungskanals 15 zu einer spiralförmigen, tornadoähnlichen Strömung 16 verformt.

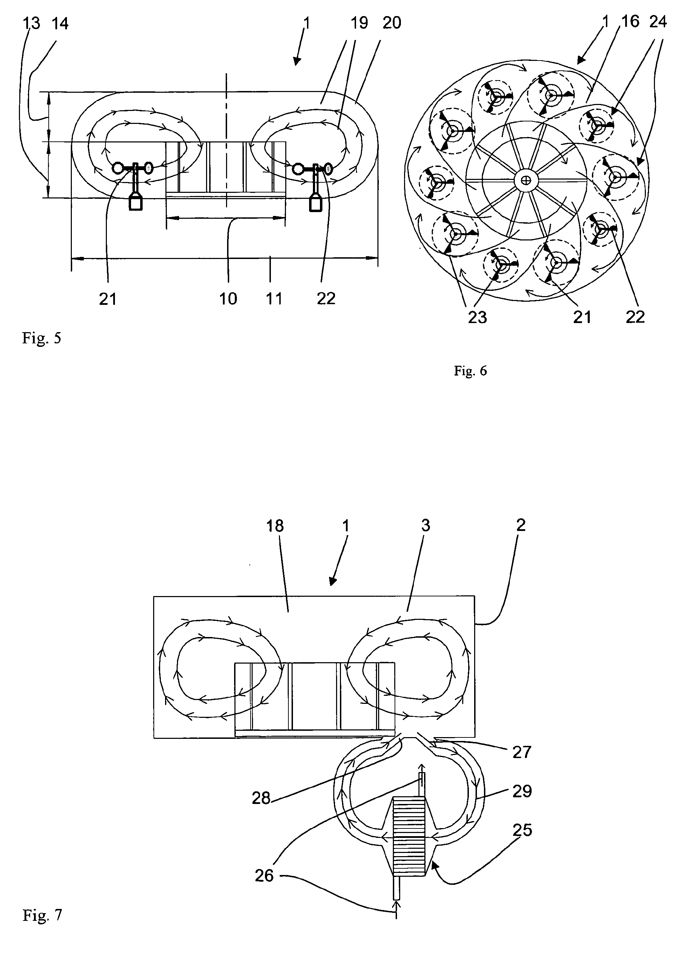

Indem die um die Zylinderachse 6 herum verlaufende Zylinderwandung 20 dem Verlauf der Druckausgleichsströmung 19 angepasst, d.h. wie aus Fig. 5 ersichtlich gekrümmt wird, wobei der Krümmungsradius der Zylinderwandung 1 zu der Zylinderachse 6 hin zeigt, wird der Strömungswiderstand für die Druckausgleichsströmung reduziert und damit ihre Richtungskomponente bei der Strömung 16 durch den Windströmungskanal 15 erhöht. Dies führt zu einer Erhöhung des Betrags der Strömung 16. In Fig. 6 ist die Anordnung mehrerer Schalensternanemometer 21 und 22 als Prüfobjekte 23 in dem Strömungskanal 15 dargestellt. Die Schalensternanemometer 21 und 22 sind dabei von unterschiedlicher Größe, um unterschiedliche Prüfobjekte 23 anzudeuten. Alle Schalensternanemometer 21 und alle Schalensternanemometer 22 befinden sich jedoch in dem Strömungskanal 15 auf zueinander drehsymmetrisch um die Achse 4 des Flügelrads 5 bzw. die Zylinderachse 6 herum angeordneten Messplätzen 24. Allein deshalb ist sichergestellt, dass die Strömung 16 alle Schalensternanemometer 21 einerseits und alle Schalensternanemometer 22 andererseits in gleicher Weise beaufschlagt. Durch die spiralförmige Strömung 16 durch den Strömungskanal 15, die also nicht unmittelbar dem Verlauf des Strömungskanals 15 folgt, wird zusätzlich verhindert, dass es zu einer gegenseitigen Verschattung der Prüfobjekte 23 kommt. Vom Flügelrad 5 ausgehend werden alle einzelnen Prüfobjekte 23 von der Strömung 16 vielmehr direkt angeströmt. Die Trennung der einzelnen Messplätze 24 voneinander kann durch Strömungsleitbleche in dem Strömungskanal 16 noch weiter erhöht werden. Diese können auch zur lokalen Erhöhung der Strömungsgeschwindigkeit verwendet werden.

Durch die, wenn auch relativ geringe Reibung der Strömung 16 an der Wandung des Gehäuses 2 kommt es über die Betriebsdauer der neuen Vorrichtung 1 zu einem Anstieg der Temperatur in dem Innenraum 3, wenn die bei der Reibung erzeugte Wärme nicht abgeführt wird. Fig. 7 zeigt einen zu dem Strömungskanal bezüglich der Strömung 16 des Fluids 18 im Bypass angeordneten Wärmetauscher 25, in dem die überschüssige Wärme auf ein Kühlmedium 26 übertragen wird. Dabei ist der Wärmetauscher 25 über Anschlüsse 27 und 28 so an dem Innenraum 3 des Gehäuses 2 angeschlossen, dass eine dort zwischen den Anschlüssen 27 und 28 auftretende Druckdifferenz für eine Durchströmung 29 des Wärmetauschers 25 sorgt. Wenn das Fluid 18 in dem Innenraum 3 Luft ist, so dass der Strömungskanal 15 ein Windkanal ist, kann die Luft in dem Innenraum 3 über die Anschlüsse 27 und 28 auch anteilig durch kühlere Umgebungsluft ersetzt werden, um eine Überhitzung des Innenraums 3 zu verhindern. Dann kann auf einen Wärmetauscher 25 verzichtet werden.

Die neue Vorrichtung ist insbesondere für Langzeittests mehrerer Prüfobjekte gleichzeitig in ihrem Strömungskanal geeignet. Hierbei spielt die nicht exakt homogene Anströmung der Prüfobjekte keine die Vorteile der neuen Vorrichtung aufzehrende negative Rolle.

### BEZUGSZEICHENLISTE

- 1: Vorrichtung
- 2: Gehäuse
- 3: Innenraum
- 4: Zylinderachse
- 5: Flügelrad
- 6: Achse
- 7: Antriebsmotor
- 8: Sockel
- 9: Boden
- 10: Durchmesser
- 11: Innendurchmesser
- 12: Rotationshohlraum
- 13: Höhe
- 14: Überstand
- 15: Strömungskanal
- 16: Strömung
- 17: Drehpfeil
- 18: Fluid
- 19: Druckausgleichsströmung
- 20: Zylinderwandung
- 21: Rotationsanemometer
- 22: Rotationsanemometer
- 23: Prüfobjekt
- 24: Messplatz
- 25: Wärmetauscher
- 26: Kühlmedium
- 27: Anschluss
- 28: Anschluss
- 29: Durchströmung

## Patentansprüche

1. Vorrichtung mit einem Gehäuse (2), das einen geschlossenen Strömungskanal (15) begrenzt, und mit einem Flügelrad (5), das in dem Gehäuse (2) zur Erzeugung einer definierten Strömung (16) eines Fluids (18) durch den Strömungskanal (15) zur Rotation um eine Achse (4) antreibbar ist, **dadurch gekennzeichnet, dass** der Strömungskanal (15) um die Achse (4) des Flügelrades (5) herum verläuft, wobei das Flügelrad (5) über seinen gesamten Umfang an den Strömungskanal (15) angrenzt.

2. Vorrichtung nach Anspruch 1, **dadurch gekennzeichnet, dass** der Strömungskanal (15) in Richtung der Achse (4) des Flügelrads (5) dieselbe Erstreckung aufweist wie das Flügelrad.

3. Vorrichtung nach Anspruch 1, **dadurch gekennzeichnet, dass** sich der Strömungskanal (16) in Richtung der Achse (4) des Flügelrads (5) auf mindestens einer Seite über das Flügelrad (5) hinaus erstreckt.

4. Vorrichtung nach einem der Ansprüche 1 bis 3, **dadurch gekennzeichnet, dass** das Gehäuse (2) einen zylinderabschnittförmigen Innenraum (3) aufweist, dessen Zylinderachse (6) mit der Achse (4) des Flügelrads (5) zusammenfällt und in dem der Strömungskanal (15) und das Flügelrad (5) angeordnet sind.

5. Vorrichtung nach Anspruch 4, **dadurch gekennzeichnet, dass** eine um die Zylinderachse (6) herum verlaufende Zylinderwandung (20) des Gehäuses (2) eine Krümmung mit zu der Zylinderachse (6) hin gerichtetem Krümmungsradius aufweist.

6. Vorrichtung nach einem der Ansprüche 1 bis 5, **dadurch gekennzeichnet, dass** ein Wärmetauscher (25) im Bypass zu der Strömung (16) durch den Strömungskanal (15) angeordnet ist.

7. Vorrichtung nach einem der Ansprüche 1 bis 6, **dadurch gekennzeichnet, dass** das Gehäuse (2) eine Schalldämmung aufweist.

8. Vorrichtung nach einem der Ansprüche 1 bis 7, **dadurch gekennzeichnet, dass** Strömungsleitbleche in dem Strömungskanal (15) angeordnet sind.

9. Vorrichtung nach Anspruch 1, **dadurch gekennzeichnet, dass** in dem Strömungskanal (15) eine Mehrzahl von Messplätzen (24) in bezüglich der Achse (4) des Flügelrads (5) zueinander drehsymmetrischen Positionen vorgesehen ist.

10. Vorrichtung nach Anspruch 1, **dadurch gekennzeichnet, dass** die Achse (4) des Flügelrads (5) vertikal ausgerichtet ist.
